Europäisches Patentamt

European Patent Office

Office européen des brevets

(19)

(11) EP 0 550 346 B1

(12) FASCICULE DE BREVET EUROPEEN

(45) Date de publication et mention
de la délivrance du brevet:
**18.07.2001 Bulletin 2001/29**

(51) Int Cl.7: **B29C 35/02**, B29C 65/02,
B29D 9/00, B32B 25/08

(21) Numéro de dépôt: **92403586.8**

(22) Date de dépôt: **30.12.1992**

(54) **Procédé de préparation de matériau composite formé d'un élastomère vulcanisé associe à un élastomère thermoplastique à séquences polyamides; et matériau composite ainsi constitué**

Verfahren zur Herstellung von einem mehrschichtigen Stoff, der mit einem vulkanisierten Elastomer verbunden zu einem thermoplastischen Elastomer, der polyamidische Sequenzen erhalt, hergestellt ist; und der mehrschichtige Stoff

Method of manufacturing a composite material, composed by a vulcanized elastomer associated to a thermoplastic elastomer which contains polyamide sequences; and the composite material itself

(84) Etats contractants désignés:
**AT BE CH DE DK ES FR GB GR IE IT LI LU NL PT SE**

(30) Priorité: **31.12.1991 FR 9116400**

(43) Date de publication de la demande:
**07.07.1993 Bulletin 1993/27**

(73) Titulaire: **Atofina**
**92800 Puteaux (FR)**

(72) Inventeurs:
• **Hert, Marius**
**F-27470 Serquigny (FR)**

• **Alex, Patrick**
**F-91470 Limours Pecquese (FR)**

(74) Mandataire: **Ahner, Francis et al**
**Cabinet Régimbeau**
**20, rue de Chazelles**
**75847 Paris cedex 17 (FR)**

(56) Documents cités:
EP-A- 0 266 982          EP-A- 0 344 427
GB-A- 1 387 583          GB-A- 1 434 719
US-A- 3 972 973

## Description

La présente invention concerne un procédé de préparation de matériau composite formé d'un élastomère vulcanisé, contenant des fonctions acide carboxylique ou anhydride de diacide carboxylique, associé à un élastomère thermoplastique à séquences polyamides. Elle concerne également le matériau composite constitué d'un élastomère vulcanisé associé à un élastomère thermoplastique à séquences polyamides et des articles de sport, notamment des semelles de chaussures de sport, constitués au moins en partie d'un tel matériau.

Les procédés d'assemblage d'élastomère vulcanisé synthétique ou naturel avec des thermoplastiques, les plus couramment utilisés comprennent plusieurs étapes coûteuses en temps et difficilement automatisables:

- Vulcanisation de la pièce en élastomère (par moulage par injection, compression, etc.),
- Cardage de sa surface,
- Halogénation par traitement avec une solution de polyoléfines chlorées et séchage,
- Application d'un adhésif en général à base de polyuréthane bi-composant,
- Surmoulage du caoutchouc avec le thermoplastique.

Ces pièces constituées d'assemblage élastomère/thermoplastique sont surtout utilisées dans l'industrie de la chaussure, notamment de la chaussure de sport haut de gamme.

Néanmoins, une importante économie au niveau du procédé pourrait être réalisée en supprimant une partie des opérations décrites plus haut, notamment toute la partie concernant l'application de l'adhésif.

La demande de brevet européen n° 0 344 427 décrit un procédé de vulcanisation d'un thermoplastique rigide contenant au moins 30% de polyamide aliphatique avec une composition à base de caoutchouc, uniquement en présence de peroxydes comme agent de vulcanisation. Ce procédé permet d'obtenir des matériaux composites à rupture cohésive, résistant aux solvants et aux conditions atmosphériques, utilisables pour faire des câbles, des tubes, des ceintures de convoyage ou des joints.

On connaît par ailleurs la réactivité de certains élastomères sur des polymères à base de polyétheresteramide. Ainsi, le brevet japonais JP 63 081159 (Derwent 88-038019/20) décrit une composition élastomérique thermoplastique constituée d'un composant polyétheresteramide et d'un élastomère ayant au moins un groupe polaire tel qu'un radical carboxylique.

Parmi ces élastomères, sont cités les élastomères acryliques, les élastomères à base de butadiène et d'acrylonitrile (élastomère nitrile) et les élastomères fluorés (propylène/tétrafluoroéthylène). Ces compositions élastomériques thermoplastiques ont une flexibilité élevée, une bonne résistance à l'huile et une résistance mécanique élevée.

Un des objets de la présente invention est de proposer un procédé de préparation de matériau composite tel que défini ci-dessus, évitant l'application d'un adhésif.

Un autre objet de la présente invention est de proposer un procédé de préparation de matériau composite tel que mentionné ci-dessus, qui soit industrialisable, c'est-à-dire avec une durée de cycle courte (en général ne dépassant pas 15 minutes).

Un autre objet de la présente invention est de proposer un matériau composite tel que défini ci-dessus, notamment destiné à la réalisation de semelles de chaussures de sport, présentant une rupture cohésive dans l'élastomère vulcanisé lors de la sollicitation à la séparation.

On rappelle qu'une rupture est dite cohésive quand, lorsque l'on sépare les deux matériaux, la rupture ne se fait pas à l'interface de ceux-ci. Par contre, lorsque la rupture se fait à cet interface, elle est dite adhésive.

D'autres avantages liés à la mise en oeuvre de la présente invention apparaîtront au cours de la description ci-après.

Ainsi, selon la présente invention, le procédé de préparation consiste en ce qu'une composition élastomérique comportant un élastomère synthétique ou naturel contenant des fonctions acide carboxylique ou anhydride de diacide carboxylique, un système de réticulation et éventuellement divers adjuvants et charges est vulcanisée dans un moule dont une partie est occupée par un élastomère thermoplastique à séquences polyamides, la température de vulcanisation étant comprise entre - 15°C et + 5°C par rapport au point Vicat dudit élastomère thermoplastique à séquences polyamides.

La composition élastomérique et la cinétique de vulcanisation sont telles que le matériau présente une rupture cohésive dans l'élastomère vulcanisé lors d'une sollicitation à la séparation des deux élastomères.

Les élastomères vulcanisés et thermoplastiques formant le matériau composite sont normalement associés de façon suffisamment forte pour empêcher toute séparation lors d'un effort normal, compte tenu de l'utilisation souhaitée. Ainsi, au sens du présent texte, le terme séparation sous-entend l'application au matériau d'une force considérablement plus élevée que celle à laquelle ledit matériau doit être normalement soumis.

Les élastomères synthétiques ou naturels vulcanisables convenant pour la mise en oeuvre de la présente invention sont bien connus de l'homme de métier, le terme élastomère dans la définition de la présente invention signifiant que celui-ci peut être constitué de mélanges de plusieurs élastomères.

Ces élastomères ou mélanges d'élastomères présentent une déformation rémanente à la compression (D. R.C.) à 100°C inférieure à 50% généralement entre 5 et 40 % et de préférence inférieure à 30 %.

Parmi ceux-ci, on peut citer le caoutchouc naturel, le polyisoprène ayant un taux élevé de double liaison en position cis, une émulsion polymérisée à base de copolymère styrène/butadiène, une solution polymérisée à base de copolymère styrène/butadiène, un polybutadiène ayant un taux élevé de double liaison en position cis obtenu par catalyse au nickel, cobalt, titane ou néodynium, un terpolymère éthylène halogéné/ propylène/diène, un caoutchouc butyle halogéné, un copolymère séquencé styrène/butadiène, un copolymère séquencé styrène/isoprène, les produits halogénés des polymères ci-dessus, un copolymère acrylonitrile/butadiène, un élastomère acrylique, un élastomère fluoré et le chloroprène.

Dans le cas ou les élastomères mentionnés ci-dessus ne comportent pas de radicaux acide carboxylique ou anhydride desdits acides (ce qui est le cas de la plupart de ceux-ci), lesdits radicaux seront apportés par greffage, de façon connue, des élastomères mentionnés ci-dessus où par des mélanges d'élastomères, par exemple avec des élastomères acryliques.

Parmi les élastomères mentionnés ci-dessus, on choisira avantageusement ceux compris dans le groupe suivant : les élastomères nitriles carboxylés, les élastomères acryliques, les polybutadiènes carboxylés, les terpolymères éthylène/propylène/diène greffés ou les mélanges de ces polymères avec les mêmes élastomères mais non greffés comme les caoutchoucs nitriles, les polybutadiènes, les terpolymères éthylène/propylène/diène, seuls ou en mélange.

De préférence, les élastomères vulcanisables précités comportent un taux en poids de radicaux acide carboxylique ou anhydride de diacide carboxylique compris entre 0,3 et 10 % par rapport auxdits élastomères.

Les systèmes de vulcanisation convenant pour la présente invention sont bien connus de l'homme de métier et en conséquence, l'invention n'est pas limitée à un type particulier de systèmes. Il suffit que celui-ci réponde au critère concernant la cinétique de vulcanisation définie dans la définition de l'invention indiquée précédemment.

Lorsque l'élastomère est à base de monomère insaturé (butadiène, isoprène, vinylidène-norbornène...) on peut citer quatre types de systèmes de vulcanisation :

- Systèmes au soufre constitués de soufre associé aux accélérateurs usuels tels que les sels métalliques de dithiocarbamates (diméthyl dithiocarbamate de zinc, de tellure etc.) les disulfures de thiurame (tétraméthyl disulfure de thiurame, etc.,) les sulféramides, etc.
  Ces systèmes peuvent contenir également de l'oxyde de zinc associé à de l'acide stéarique.
- Systèmes donneurs de soufre dans lesquels la majorité du soufre utilisé pour les pontages, provient de molécules soufrées telles que les composés organosoufrés cités plus haut.
- Systèmes aux résines phénoliques constitués de résines formophénoliques difonctionnelles pouvant être halogénées associées à des accélérateurs tels que le chlorure stanneux, l'oxyde de zinc.
- Systèmes aux peroxydes. Tous les donneurs de radicaux libres peuvent être utilisés (peroxydes de dicumyle, etc.) en association avec l'oxyde de zinc et l'acide stéarique.

Lorsque l'élastomère est acrylique (polyacrylate de butyle avec fonctions acides ou époxy ou toute autre fonction réactive permettant la réticulation) on utilise les réticulants habituels à base de diamines (orthotoluidyl guanidine, diphénylguanidine, etc.) ou de diamines bloquées (carbamate d'hexaméthylène diamine, etc.).

Les compositions élastomériques peuvent être modifiées pour certaines propriétés particulières (amélioration des propriétés mécaniques par exemple) par l'addition de charges telles que le noir de carbone, la silice, le kaolin, l'aluminium, l'argile, le talc, la craie, etc. Ces charges peuvent être traitées en surface par des silanes, des polyéthylèneglycols ou toute autre molécule de couplage. En général, le taux de charges en parties en poids est compris entre 5 et 100 pour 100 parties d'élastomères.

En outre, les compositions peuvent être assouplies par des plastifiants tels que les huiles minérales dérivées du pétrole, les esters de l'acide phtalique ou de l'acide sébacique, les plastifiants polymères liquides tels que le polybutadiène de faible masse éventuellement carboxylé, et d'autres plastifiants bien connus de l'homme du métier.

Les combinaisons d'agent de vulcanisation utilisées pour mettre en oeuvre le procédé sont telles qu'elles doivent permettre une réticulation complète de l'élastomère selon une cinétique conduisant à de bonnes propriétés de résistances à la séparation, telles que mentionnées dans la définition de l'invention et en général, à de bonnes propriétés caoutchoutiques (mesurées par une déformation rémanente à la compression à 100°C, des propriétés dynamométriques en traction, etc.).

De préférence, la température de vulcanisation est comprise entre - 15°C et + 0°C par rapport au point Vicat de l'élastomère thermoplastique à séquences polyamides.

La température de vulcanisation dans le moule sera avantageusement comprise entre 130 et 180°C.

Avantageusement, la cinétique mesurée à l'aide d'un rhéomètre oscillant sera telle que le temps caractéristique de vulcanisation à 90%, $t_{90}$, ne dépasse pas 15 minutes et avantageusement sera compris entre 5 et 10 minutes.

Par ailleurs, il a été trouvé que le temps de démarrage de vulcanisation (ou temps de prise) correspondant à une augmentation de couple de 0,2 N.m était un facteur important pour obtenir des matériaux présentant de bonnes performances. Ainsi, il est avantageux que l'augmentation de couple précité soit atteinte dans un temps supérieur ou égal à 4 minutes à la température de moulage et de préférence entre 4 et 6 minutes.

En ce qui concerne le point dit Vicat ou encore point de ramollissement, on sait que c'est un paramètre bien connu pour mesurer les propriétés physiques d'un polymère. Le point Vicat est la température à laquelle une aiguille ayant une section transversale circulaire de 1 $mm^2$ pénètre de 1 mm de profondeur dans l'échantillon lors d'une montée de température de 50°C par heure selon la norme ASTM D1525. Ainsi, à cette température, le polymère ne flue pas et n'est pas à l'état fondu.

Les élastomères thermoplastiques à séquences polyamides sont ceux dont les séquences polyamides sont séparées par des séquences différentes telles que des polyester, polyéther, polyuréthane par exemple.

Les élastomères thermoplastiques à séquences polyamides avantageusement utilisés pour mettre en oeuvre le procédé sont des polyéthers à blocs polyamides (ou polyétheramides).

Par polyéthers à blocs polyamides, on entend aussi bien les polyéthers à blocs polyamides statistiques (c'est-à-dire formés par l'enchaînement aléatoire des divers constituants monomères) que les polyéthers à blocs polyamides séquencés, c'est-à-dire de blocs présentant une certaine longueur de chaîne de leurs divers constituants.

Les polyéthers à blocs polyamides convenant pour la présente invention sont bien connus de l'homme du métier. Ils sont obtenus par une réaction de condensation de séquences polyamides à extrémités réactives avec des séquences polyéthers à extrémités réactives, telles que, entre autres :

1° - Séquences polyamides à bouts de chaînes diamines avec des séquences polyoxyalkylènes à bouts de chaînes dicarboxyliques.

2° - Séquences polyamides à bouts de chaînes dicarboxyliques avec des séquences polyoxyalkylènes à bouts de chaînes diamines obtenues par cyanoéthylation et hydrogénation de séquences polyoxyalkylènes alpha-oméga dihydroxylées aliphatiques appelées polyétherdiols.

3° - Séquences polyamides à bouts de chaînes dicarboxyliques avec des polyétherdiols, les polyétheramides obtenus étant, dans ce cas particulier, des polyétheresteramides.

La composition et la fabrication de tels polyétheresteramides ont été décrites dans les brevets français n° 74 18913 et 77 26678 au nom de la Demanderesse et dont le contenu s'ajoute à la présente description.

Selon un mode de réalisation de l'invention, le polyétheramide est un polyétheresteramide séquencé de poids moléculaire supérieur à 10 000, formé du produit de la copolycondensation d'un polyamide ou copolyamide alpha-oméga dicarboxylique présentant un poids moléculaire de 300 à 15 000 et, de préférence, 600 à 5000, employé à raison de 95 à 15 % en poids et d'un polyétherdiol présentant un poids moléculaire de 100 à 6000 et, de préférence 200 à 3000, employé à raison de 5 à 85 % en poids.

Parmi les polyéthers, on peut citer le polyoxyéthylène glycol, le polyoxypropylène glycol, le polyoxytétraméthylène glycol, ayant un poids moléculaire moyen compris entre 100 et 6000, de préférence entre 200 et 3000. Ces polyéthers peuvent également résulter de mélanges de polymères cités ci-avant. L'allongement des chaînes polyéthers est assuré par des liaisons esters.

En ce qui concerne les polyamides, on utilisera de préférence ceux qui sont disponibles et connus sous les dénominations nylon 6, 11, 12, 66, 612.

Avantageusement, ces polyéthers à blocs polyamides auront un point Vicat compris entre 100 et 200°C, de préférence entre 130 et 175°C et un point de fusion compris entre 120 et 210°C et de préférence entre 140 et 180°C.

De façon générale, le procédé consiste à former un élastomère thermoplastique à séquences polyamides et notamment un polyéther à blocs polyamides puis à disposer par un moyen approprié l'élastomère thermoplastique à séquences polyamides dans un moule de vulcanisation, de manière, de préférence, à ce qu'il soit apposé contre une des parois du moule. Ainsi, dans le cas ou l'élastomère est un film, celui-ci est formé par extrusion notamment. Son épaisseur variera de préférence entre 0,3 et 5 mm, avantageusement inférieure ou égale à 1 mm. La largeur du film est variable, et il peut être découpé à l'emporte-pièce. La pièce de film est ensuite positionnée contre au moins une partie de la paroi du moule de vulcanisation de l'élastomère, de manière connue. Les pièces de film peuvent également être stockées le temps souhaité.

Dans le cas où l'élastomère thermoplastique est formé d'un élément de forme définie par exemple en forme de profilé découpé, celui-ci est de préférence apposé au fond du moule.

On peut également utiliser un moule à injection bi-matière séquencée. Dans ce cas, le moule est équipé de cache-empreintes de la partie élastomère qui sont retirés après injection du thermoplastique pour permettre l'injection de l'élastomère.

La composition élastomérique comportant l'élastomère avec ses charges, plastifiants et autres adjuvants, mais sans le système de réticulation est formulée dans un réacteur approprié, puis elle est reprise éventuellement dans un autre mélangeur, à une température appropriée avec le système de vulcanisation.

Le moulage de l'élastomère ainsi que sa vulcanisation est effectuée dans le moule dont une partie est occupée par la pièce de polyéther à blocs polyamides, comme indiqué ci-dessus, selon un des procédés classiques de l'industrie du caoutchouc : compression simple, compression transfert, injection, injection de transfert. En général, elle s'effectue dans un moule à compression en acier, d'une épaisseur de quelques millimètres, placé entre deux plateaux chauffants d'une presse. La quantité de composition élastomérique introduite dans le moule peut dépasser légèrement le volume de l'empreinte. La fermeture de la presse entraîne le fluage de l'élastomère dans le moule et l'évacuation de l'excès d'élastomère par les canaux de débordement. Ainsi, après répartition de matière, et compte tenu de la géométrie du moule, la pression sur la composition élastomérique est faible (voisine de la pression atmosphérique). Selon cette variante, et de façon surprenante, il a été trouvé que les matériaux obtenus présentaient des propriétés excellentes dans le cas où la température du plateau, haut du moule, était égale à la température Vicat de l'élastomère thermoplastique à plus ou moins 5°C, et la température du plateau bas du moule était comprise entre la température Vicat de l'élastomère thermoplastique et la température Vicat diminuée de 15°C.

Lorsque la vulcanisation est terminée, au bout d'un temps inférieur à 15 minutes, avantageusement compris entre 5 et 10 minutes, déterminé au préalable par le $t_{90}$ du rhéomètre oscillant, la pièce est retirée.

Dans le cas où l'élastomère thermoplastique est un film, on applique, lorsque l'on change l'épaisseur, une formule empirique bien connue dans la technique de vulcanisation des élastomères:

$$\text{Temps de vulcanisation (min)} = t_{90} + (E - 2)$$

E étant l'épaisseur en mm.

L'invention a également pour objet un matériau composite formé d'un élastomère vulcanisé contenant des fonctions acide carboxylique ou anhydride de diacide carboxylique, associé directement à un élastomère thermoplastique à séquences polyamides ayant un point de fusion compris entre 120 et 210°C et un point Vicat compris entre 100°C et 200°C, ledit matériau composite présentant une rupture cohésive à l'intérieur de l'élastomère vulcanisé lors d'une sollicitation à la séparation. Les élastomères vulcanisés sont ceux qui ont été décrits précédemment à l'occasion de l'exposé du procédé de préparation du matériau composite, y compris les variantes concernant l'addition de charges ou de plastifiants notamment.

Le terme directement signifie qu'aucun adhésif n'est présent entre lesdits élastomères.

En ce qui concerne les polyéthers à blocs polyamides, on se référera également à l'exposé précédent concernant le procédé de préparation.

De préférence, la séquence polyamide sera choisie parmi les polyamides 6, 11 ou 12 et les séquences polyéthers seront choisies parmi les polyéthylènes oxydes, les polypropylènes oxydes et les polytétraméthylènes oxydes ou un mélange de ces différents motifs de poids moléculaire compris entre 100 et 6 000.

La résistance à la séparation est appréciée par différents tests normalisés qui seront choisis selon le type de matériau composite considéré.

Si le polyéther à blocs polyamides est sous la forme d'un film, la résistance à la séparation sera mesurée par le test de pelage. De préférence, la résistance au pelage sera avantageusement supérieure à 6 daN/cm.

Dans le cas, d'un point de vue industriel le plus intéressant, où l'élastomère thermoplastique à séquences polyamides est un bloc ou objet ayant une forme définie, par exemple, un élément de renfort noyé partiellement ou inséré dans l'élastomère vulcanisé, on mesurera la résistance à la traction. Celle-ci variera selon la forme de l'article.

L'invention trouve une application particulièrement intéressante pour la réalisation d'articles de sport dont une partie au moins est constituée d'un matériau composite tel que défini ci-dessus.

L'invention est ainsi avantageusement adaptée à la réalisation de semelles de chaussures de sport dont une partie au moins est en élastomère vulcanisé comportant un ou plusieurs éléments de renfort en élastomère thermoplastique comme décrit ci-avant.

Les exemples ci-dessous illustrent l'invention sans toutefois la limiter.

Selon un procédé général de mise en oeuvre commun à tous les exemples décrits, la composition élastomérique sans le système de réticulation est formulée sur un mélangeur interne Repiquet K1 de 3,5 litres, dont les rotors tournent à 60 tpm. L'opération se fait en régime semi-adiabatique, avec transformation de l'énergie mécanique en chaleur. On obtient un mélange intime en moins de 5 minutes et la température atteint 110°C.

L'élastomère ainsi formulé est ensuite repris sur un mélangeur à cyclindres chauffés à 80°C et on lui rajoute le système de vulcanisation.

Le surmoulage sur la pièce en élastomère thermoplastique à séquences polyamides par la composition élastomérique s'effectue dans un moule à compression en acier, placé entre les deux plateaux chauffants d'une presse.

La force de pelage est mesurée au bout de 24 heures. Le pelage est amorcé en se ménageant une zone sans adhésion entre élastomère vulcanisé et le polyéther à blocs polyamides avec un ruban adhésif d'aluminium placé sur le polyéther à blocs polyamides avant moulage de l'élastomère.

EXEMPLE 1

Une composition élastomérique comportant en partie en poids :

- Copolymère butadiène-acrylonitrile 80 (commercialisation sous le nom de marque Krynac 2750)
- Terpolymère butadiène-acrylonitrile- 20 acide acrylique 69/24/7
- Silice 20
- Silane 1
- Phtalate de dioctyle 5
- Agent de traitement de la silice 2
- $TiO_2$ 10
- Antioxydant 1
   est mélangé avec un système de vulcanisation de composition en partie poids :

- ZnO 5
- Acide stéarique 1
- Peroxyde de dicumyle 5 (à 40 % de craie)

Elle est ensuite coulée sur un surmoule formé d'un film de polyéther à blocs polyamides (PEBA) commercialisé sous le nom de marque PEBAX 6333 de point Vicat égal à 161°C, dont l'épaisseur est de 0,5 mm et qui est placé dans l'empreinte du moule côté bas.
Les conditions de moulage sont les suivantes :

- Température plateau haut 160°C
- Température plateau bas 155°C
- Temps de vulcanisation 10 minutes

EXEMPLE 2

L'exemple 1 est reproduit à la différence prêt que l'on utilise le mélange suivant d'élastomères :

- Copolymère butadiène-acrylonitrile 70
- Terpolymère butadiène - acrylonitrile 30 acide acrylique 69/24/7

EXEMPLE 3

L'exemple 1 est reproduit à la différence prêt que l'on utilise l'élastomère terpolymère butadiène-acrylonitrile-acide acrylique 69/24/7 comme seul élastomère.

EXEMPLE 4

Une conjonction élastomérique comportant en partie en poids :

- Polybutadiène carboxylé à 7 % d'acide carboxylique 5
- Copolymère butadiène styrène 85/15 70
- Terpolymère butadiène - acrylonitrile acide acrylique 69/24/7 30
- Silice 20
- Silane 1
- Phtalate de dioctyle 5
- Agent de traitement de la silice 2
- $TiO_2$ 10
- Antioxydant 1
   est mélangé avec un système de vulcanisation de composition en partie en poids :

- Soufre 2

- Disulfure de mercapto-benzothiazole 1,5
- Disulfure de tétraméthylthiurane 0,5
- ZnO 5
- Acide stéarique 2

Cet élastomère a un temps de prise de 4 minutes 20 secondes 3 160°C.

La mise en oeuvre se fait selon la procédure décrite a l'exemple 1.

EXEMPLE COMPARATIF 1 (EC1)

L'exemple 1 est reproduit mis à part le fait que le terpolymère butadiène-acrylonitrile-acide acrylique 69/24/7 est remplacé par un copolymère butadiène acrylonitrile 73/27 dans les mêmes proportions.

EXEMPLE COMPARATIF 2 (EC2)

L'exemple 4 est reproduit mis à part le fait que le terpolymère butadiène-acrylonitrile-acide acrylique 69/24/7 est remplacé par le copolymère butadiène-styrène 85/15 dans les mêmes quantités ce qui conduit à 100 parties de ce dernier copolymère.

TABLEAU 1

| Exemples | 1 | 2 | 3 | 4 | EC1 | EC2 |
|---|---|---|---|---|---|---|
| Point Vicat °C | 161 | 161 | 161 | 161 | 161 | 161 |
| Conditions de mise en oeuvre: Temp. haut Temp. bas | 160 155 | 160 155 | 160 155 | 160 155 | 160 155 | 160 155 |
| Force de pelage daN/cm | 7.5 | 11.9 | 8.3 | 9.2 | 0.3 | 0 |
| Observations de rupture | cohésive | cohésive | cohésive | cohésive | adhésive | adhésive |

Les exemples 7, 8, 9 ci-dessous ont pour but d'illustrer l'influence de la température de mise en oeuvre en fonction du point Vicat du polyéther à blocs polyamides (PEBA).

EXEMPLE 7

L'exemple 2 a été reproduit mis à part le fait que la température du plateau bas est de 150°C (au lieu de 155°C à l'exemple 1).

La force de pelage en daN/cm est de 8,5 et la rupture est cohésive.

EXEMPLE 8

L'exemple 2 a été reproduit mis à part le fait que le PEBA utilisé est commercialisé sous le nom de marque PEBAX 5533 et a un point Vicat de 144°C et que l'on a modifié les températures des plateaux haut et bas, respectivement à 140 et 140. La force de pelage en daN/cm est de 10,75 et la rupture est cohésive.

EXEMPLE 9

L'exemple 2 a été reproduit mis à part le fait que le PEBA utilisé est commercialisé sous le nom de marque PEBAX 7033 et a un point Vicat de 165°C et que l'on a modifié les températures des plateaux haut et bas, respectivement à 165 et 155. La force de pelage en daN/cm est de 8 et la rupture est cohésive.

On a également vérifié qu'avec des épaisseurs de 0,8 et 1,6 mm les mêmes performances étaient obtenues.

EXEMPLE 10

Une pièce en forme de demi-cercle de 2 mm d'épaisseur est réalisée au moulage par injection thermoplastique, avec du PEBAX 6333.

Un élastomère ayant la formulation de l'exemple 1 et un système de vulcanisation constitué de :

- Oxyde de zinc : 5 parties pour cent
- Acide stéarique : 2 " " "
- Soufre : 2 " " "
- Disulfure de mercaptobenzothiazyle : 1,5 " " "
- Disulfure de tétraméthylthiurane : 0,5 " " "

est ensuite surmoulé sur cette pièce en PEBAX, en utilisant le procédé de moulage par injection d'élastomère, avec presse REP M36 de 700 kN de force de fermeture, équipé d'une vis de plastification et d'un pot de transfert actionné par piston.

La pièce en PEBAX est insérée dans l'empreinte du plateau bas d'un moule élastomère dont le plateau haut est équipé de quatre empreintes en forme de plots de 6 mm de hauteur identiques aux crampons sur semelles de chaussures de football. Ces empreintes sont alimentées par l'intermédiaire de buselettes reliées au pot de transfert par un système de canaux cylindriques.

L'injection se fait à une température matière de 120°C et une vitesse de piston de 30 mm/s. Les températures des plateaux haut et bas sont respectivement de 160° et 155°C et la pièce est démoulée au bout de 6 minutes.

La pièce ainsi obtenue présente une rupture cohésive dans le caoutchouc lorsqu'on fait un test dynamométrique d'arrachement du plot.

La pièce composite possède la bonne résistance à l'abrasion et l'élasticité en compression du caoutchouc nitrile tandis que le PEBAX apporte les propriétés mécaniques dynamiques, la légèreté et le confort du pied.

## Revendications

1. Procédé de préparation de matériau composite formé d'un élastomère vulcanisé contenant des fonctions acide carboxylique ou anhydride de diacide carboxylique, associé à un élastomère thermoplastique à séquences polyamides, dans lequel une composition élastomérique comportant ledit élastomère vulcanisable, un système de réticulation et éventuellement divers adjuvants est vulcanisée dans un moule dont une partie est occupée par ledit élastomère thermoplastique à séquences polyamides, la température de vulcanisation étant comprise entre-15°C et + 5°C par rapport au point Vicat dudit élastomère thermoplastique à séquences polyamides.

2. Procédé selon la revendication 1, caractérisé en ce que l'élastomère vulcanisable est choisi parmi le groupe constitué par les élastomères nitriles carboxylés, les élastomères acryliques, les polybutadiènes carboxylés, les terpolymères éthylène/propylène/diène greffés ou les mélanges de ces polymères avec les mêmes élastomères mais non greffés comme les caoutchoucs nitriles, les polybutadiènes, les terppolymères éthylène/propylène/ diène, seuls ou en mélange.

3. Procédé selon l'une des revendications 1 ou 2,
caractérisé en ce les élastomères vulcanisables comportent un taux de radicaux acide carboxylique ou anhydride de diacide compris entre 0,3 et 10% par rapport auxdits élastomères.

4. Procédé selon la revendication 1, caractérisé en ce que la composition élastomérique comprend des charges, le taux de charges étant de préférence compris en parties en poids entre 5 et 100 pour 100 parties d'élastomères.

5. Procédé selon la revendication 1, caractérisé en ce que la température de vulcanisation est comprise entre -15°C et + 0°C par rapport au point Vicat de l'élastomère thermoplastique à séquences polyamides.

6. Procédé selon la revendication 1, caractérisé en ce que le temps caractéristique de vulcanisation à 90 %, $t_{90}$, ne dépasse pas 15 minutes.

7. Procédé selon la revendication 6, caractérisé en ce que le temps caractéristique de vulcanisation à 90%, $t_{90}$, est compris entre 5 et 10 minutes.

8. Procédé selon l'une des revendications 1, 6 ou 7,
caractérisé en ce que le temps de démarrage de vulcanisation (correspondant à une augmentation de couple de 0,2 N.m) est compris entre 4 et 6 minutes.

9. Procédé selon la revendication 1, caractérisé en ce que l'élastomère thermoplastique à blocs polyamides est un polyéther à blocs polyamides.

10. Procédé selon la revendication 9, caractérisé en ce que les polyéthers à blocs polyamides ont un point Vicat compris entre 100 et 200°C, de préférence entre 130 et 175°C.

11. Procédé selon la revendication 1, caractérisé en ce que:

   a) on forme un élastomère thermoplastique à séquences polyamides, notamment de polyéther à blocs polyamides,
   b) on positionne ledit élastomère dans un moule de vulcanisation,
   c) on introduit et vulcanise la composition élastomérique dans le moule à une température avantageusement comprise entre 130 et 180°C.

12. Procédé selon la revendication 11, caractérisé en ce que le moule de vulcanisation est placé entre deux plateaux chauffants, la température du plateau haut du moule étant égale à la température Vicat de l'élastomère thermoplastique à plus ou moins 5°C, et la température du plateau bas du moule étant comprise entre la température Vicat de l'élastomère thermoplastique et la température Vicat diminuée de 15°C.

13. Matériau composite formé d'un élastomère vulcanisé contenant des fonctions acide carboxylique ou anhydride de diacide carboxylique, associé directement à un élastomère thermoplastique à séquences polyamides ayant un point de fusion compris entre 120 et 210°C, et un point Vicat compris entre 100 et 200°C, ledit matériau composite présentant une rupture cohésive à l'intérieur de l'élastomère vulcanisé lors d'une sollicitation à la séparation.

14. Matériau composite selon la revendication 13,
caractérisé en ce que l'élastomère thermoplastique à séquences polyamides a un point de fusion compris entre 140 et 180°C et un point Vicat compris entre 130 et 175°C.

15. Matériau composite selon la revendication 13 ou 14,
caractérisé en ce que l'élastomère est choisi parmi le groupe constitué par les élastomères nitriles carboxylés, les élastomères acryliques, les polybutadiènes carboxylés, les terpolymères èthylène/propylène/diène greffés ou les mélanges de ces polymères avec les mêmes élastomères mais non greffés comme les caoutchoucs nitriles, les polybutadiènes, les terpolymères èthylène/propylène/diène, seuls ou en mélange.

16. Matériau composite selon l'une quelconque des revendications 13 à 15, caractérisé en ce que l'élastomère comprend des charges, le taux de charges étant de préférence compris en parties en poids entre 5 et 100 pour 100 parties d'élastomères.

17. Matériau composite selon la revendication 13,
caractérisé en ce que l'élastomère thermoplastique est un polyéther à blocs polyamide.

18. Matériau composite selon la revendication 17,
caractérisé en ce que le polyamide est choisi parmi les polyamides 6, 11 ou 12, et les séquences polyéthers parmi les polyéthylènes oxydes, les polypropylènes oxydes, les polytétraméthylènes oxydes ou un mélange de ces motifs.

19. Articles de sport dont une partie au moins est constituée d'un matériau composite tel que défini aux revendications 13 à 18.

20. Semelles de chaussures de sport dont une partie au moins est constituée d'un matériau composite selon l'une des revendications 13 à 18, formée d'un élastomère vulcanisé comportant un ou plusieurs éléments de renfort en élastomère thermoplastique.

**Patentansprüche**

1. Verfahren zur Herstellung eines Verbundmaterials, welches aus einem vulkanisierten Elastomer, das Carbonsäure- oder Dicarbonsäureanhydrid-Funktionen enthält, verbunden mit einem thermoplastischen Elastomer mit Polyamid-Sequenzen gebildet ist, in welchem eine Elastomerzusammensetzung, die das vulkanisierbare Elastomer, ein Vernetzungssystem und gegebenenfalls verschiedene Hilfsmittel umfasst, in einer Form vulkanisiert wird, wobei ein Teil derselben von dem thermoplastischen Elastomer mit Polyamid-Sequenzen eingenommen ist und wobei die Vulkanisationstemperatur zwischen -15°C und +5°C bezüglich des Vicat-Punktes des thermoplastischen Elastomers mit Polyamid-Sequenzen liegt.

2. Verfahren nach Anspruch 1, dadurch gekennzeichnet, dass das vulkanisierbare Elastomer ausgewählt ist aus der Gruppe bestehend aus gepropften carboxylierten Nitril-Elastomeren, Acryl-Elastomeren, carboxylierten Polybutadienen, Ethylen/Propylen/Dien-Terpolymeren oder Mischungen dieser Polymere mit den gleichen Elastomeren, die aber nicht gepfropft sind, wie Nitril-Kautschuken, Polybutadienen, Ethylen/-Propylen/Dien-Terpolymeren, allein oder in Mischung.

3. Verfahren nach einem der Ansprüche 1 oder 2, dadurch gekennzeichnet, dass die vulkanisierbaren Elastomere einen Gehalt an Carbonsäure- oder Disäureanhydrid-Resten von 0,3 bis 10 %, bezogen auf die Elastomere, umfassen.

4. Verfahren nach Anspruch 1, dadurch gekennzeichnet, dass die Elastomerzusammensetzung Füllstoffe unfasst, wobei der Gehalt an Füllstoffen vorzugsweise zwischen 5 und 100 Gewichtsteilen, bezogen auf 100 Teile an Elastomeren, eingeschlossen ist.

5. Verfahren nach Anspruch 1, dadurch gekennzeichnet, dass die Vulkanisationstemperatur zwischen -15°C und +0°C bezüglich des Vicat-Punktes des thermoplastischen Elastomers mit Polyamid-Sequenzen liegt.

6. Verfahren nach Anspruch 1, dadurch gekennzeichnet, dass die charakteristische Vulkanisationszeit bis 90 %, $t_{90}$, nicht über 15 Minuten beträgt.

7. Verfahren nach Anspruch 6, dadurch gekennzeichnet, dass die charakteristische Vulkanisationszeit bis 90 %, $t_{90}$, 5 bis 10 Minuten beträgt.

8. Verfahren nach einem der Ansprüche 1, 6 oder 7, dadurch gekennzeichnet, dass die Anlaufzeit für die Vulkanisation (entsprechend einer Bindungserhöhung von 0,2 N · m) bei 4 bis 6 Minuten liegt.

9. Verfahren nach Anspruch 1, dadurch gekennzeichnet, dass das thermoplastische Elastomer mit Polyamid-Blöcken ein Polyether mit Polyamid-Blöcken ist.

10. Verfahren nach Anspruch 9, dadurch gekennzeichnet, dass die Polyether mit Polyamid-Blöcken einen Vicat-Punkt eingeschlossen zwischen 100 und 200°C, vorzugsweise zwischen 130 und 175°C, aufweisen.

11. Verfahren nach Anspruch 1, dadurch gekennzeichnet, daß man

a) ein thermoplastisches Elastomer mit Polyamid-Sequenzen, insbesondere einen Polyether mit Polyamid-Blöcken bildet,
b) das Elastomer in einer Vulkanisationsform anordnet,
c) die Elastomerzusammensetzung in die Form einführt und darin bei einer Temperatur vulkanisiert, die vorteilhafterweise zwischen 130 und 180°C eingeschlossen ist.

12. Verfahren nach Anspruch 11, dadurch gekennzeichnet, dass die Vulkanisationsform zwischen zwei Heizplatten angeordnet ist, wobei die Temperatur der Platte über der Form gleich der Vicat-Temperatur des thermoplastischen Elastomers plus/minus 5°C ist und die Temperatur der Platte unter der Form zwischen der Vicat-Temperatur des thermoplastischen Elastomers und der Vicat-Temperatur minus 15°C liegt.

13. Verbundmaterial, gebildet aus einem vulkanisierten Elastomer, das Carbonsäure- oder Dicarbonsäureanhydrid-Funktionen enthält und das direkt mit einem thermoplastischen Elastomer mit Polyamid-Sequenzen verbunden ist, welches einen Schmelzpunkt eingeschlossen zwischen 120 und 210°C und einen Vicat-Punkt eingeschlossen zwischen 100 und 200°C aufweist, wobei das Verbundmaterial bei einer Trennungsbeanspruchung einen Kohäsionsbruch im Inneren des vulkanisierten Elastomers zeigt.

14. Verbundmaterial nach Anspruch 13, dadurch gekennzeichnet, dass das thermoplastische Elastomer mit Polyamid-Sequenzen einen Schmelzpunkt eingeschlossen zwischen 140 und 180°C und einen Vicat-Punkt eingeschlossen zwischen 130 und 175°C aufweist.

15. Verbundmaterial nach Anspruch 13 oder 14, dadurch gekennzeichnet, dass das Elastomer ausgewählt ist aus der Gruppe bestehend aus gepropften carboxylierten Nitril-Elastomeren, Acryl-Elastomeren, carboxylierten Polybutadienen, Ethylen/Propylen/Dien-Terpolymeren oder Mischungen dieser Polymere mit den gleichen Elastomeren, die aber nicht gepfropft sind, wie Nitril-Kautschuken, Polybutadienen, Ethylen/Propylen/Dien-Terpolymeren, allein oder in Mischung.

16. Verbundmaterial nach irgendeinem der Ansprüche 13 bis 15, dadurch gekennzeichnet, dass das Elastomer Füllstoffe umfasst, wobei der Gehalt an Füllstoffen vorzugsweise zwischen 5 und 100 Gewichtsteilen pro 100 Teile an Elastomeren eingeschlossen ist.

17. Verbundmaterial nach Anspruch 13, dadurch gekennzeichnet, dass das thermoplastische Elastomer ein Polyether mit Polyamid-Blöcken ist.

18. Verbundmaterial nach Anspruch 17, dadurch gekennzeichnet, dass das Polyamid ausgewählt ist aus den Polyamiden 6, 11 oder 12, und die Polyether-Sequenzen ausgewählt sind aus Polyethylenoxiden, Polypropylenoxiden, Polytetramethylenoxiden oder einer Mischung dieser Einheiten.

19. Sportartikel, bei denen mindestens ein Teil aus einem wie in den Ansprüchen 13 bis 18 definierten Verbundmaterial besteht.

20. Sportschuhsohlen, bei denen mindestens ein Teil aus einem Verbundmaterial nach einem der Ansprüche 13 bis 18 besteht, welcher aus einem vulkanisierten Elastomer gebildet ist, das ein oder mehrere Verstärkungselemente aus thermoplastischem Elastomer umfasst.

**Claims**

1. Process for the preparation of composite material formed from a vulcanized elastomer, containing carboxylic acid or dicarboxylic acid anhydride groups, in combination with a thermoplastic elastomer containing polyamide blocks, in which an elastomer composition comprising the said vulcanizable elastomer, a crosslinking system and, optionally, diverse adjuvants is vulcanized in a mould, one part of which is occupied by the said thermoplastic elastomer containing polyamide blocks, the vulcanization temperature being between - 15°C and + 5°C with respect to the Vicat point of the said thermoplastic elastomer containing polyamide blocks.

2. Process according to Claim 1, characterized in that the vulcanizable elastomer is chosen from the group comprising carboxylated nitrile elastomers, acrylic elastomers, carboxylated polybutadienes, ethylene/propylene/diene graft terpolymers or mixtures of these polymers with the same elastomers, but ungrafted, such as nitrile rubbers, polybutadienes or ethylene/propylene/diene terpolymers, on their own or as a mixture.

3. Process according to either of Claims 1 and 2, characterized in that the vulcanizable elastomers comprise a proportion of carboxylic acid or diacid anhydride radicals of between 0.3 and 10 % with respect to the said elastomers.

4. Process according to Claim 1, characterized in that the elastomer composition comprises fillers, the proportion of fillers preferably being, in parts by weight, between 5 and 100 per 100 parts of elastomers.

5. Process according to Claim 1, characterized in that the vulcanization temperature is between -15°C and 0°C with respect to the Vicat point of the thermoplastic elastomer containing polyamide blocks.

6. Process according to Claim 1, characterized in that the characteristic 90% vulcanization time, $t_{90}$, does not exceed 15 minutes.

7. Process according to Claim 6, characterized in that the characteristic 90% vulcanization time, $t_{90}$, is between 5 and 10 minutes.

8. Process according to one of Claims 1, 6 or 7, characterized in that the vulcanization initiation time (corresponding to a 0.2 N.m increase in torque) is between 4 and 6 minutes.

9. Process according to Claim 1, characterized in that the thermoplastic elastomer containing polyamide blocks is a polyether containing polyamide blocks.

10. Process according to Claim 9, characterized in that the polyethers containing polyamide blocks have a Vicat point of between 100 and 200°C, preferably of between 130 and 175°C.

11. Process according to Claim 1, characterized in that:

a) a thermoplastic elastomer containing polyamide blocks is formed, in particular from polyether containing polyamide blocks,
b) the said elastomer is placed in a vulcanization mould,
c) the elastomer composition is introduced into, and vulcanized in, the mould at a temperature advantageously of between 130 and 180°C.

12. Process according to Claim 11, characterized in that the vulcanization mould is placed between two hot plates, the temperature of the top plate of the mould being equal to the Vicat temperature of the thermoplastic elastomer to within 5°C and the temperature of the bottom plate of the mould being between the Vicat temperature of the thermoplastic elastomer and the Vicat temperature minus 15°C.

13. Composite material formed from a vulcanized elastomer containing carboxylic acid or dicarboxylic acid anhydride groups, directly combined with a thermoplastic elastomer containing polyamide blocks having a melting point of between 120 and 210°C and a Vicat point of between 100 and 200°C, the said composite material showing cohesive separation inside the vulcanized elastomer during separation stress.

14. Composite material according to Claim 13, characterized in that the thermoplastic elastomer containing polyamide blocks has a melting point of between 140 and 180°C and a Vicat point of between 130 and 175°C.

15. Composite material according to Claim 13 or 14, characterized in that the elastomer is chosen from the group comprising carboxylated nitrile elastomers, acrylic elastomers, carboxylated polybutadienes, ethylene/ propylene/ diene graft terpolymers or mixtures of these polymers with the same elastomers, but ungrafted, such as nitrile rubbers, polybutadienes or ethylene/propylene/diene terpolymers, on their own or as a mixture.

16. Composite material according to any one of Claims 13 to 15, characterized in that the elastomer comprises fillers, the proportion of fillers preferably being, in parts by weight, between 5 and 100 per 100 parts of elastomers.

17. Composite material according to Claim 13, characterized in that the thermoplastic elastomer is a polyether containing polyamide blocks.

18. Composite material according to Claim 17, characterized in that the polyamide is chosen from polyamides 6, 11 or 12 and the polyether blocks are chosen from polyethylene oxides, polypropylene oxides and polytetramethylene oxides or a mixture of these units.

19. Sports articles, at least part of which consists of a composite material as defined in Claims 13 to 18.

20. Sports shoe soles, at least part of which consists of a composite material according to one of Claims 13 to 18, formed from a vulcanized elastomer comprising one or more reinforcing elements of thermoplastic elastomer.